# EUROPÄISCHE PATENTSCHRIFT

(11) **EP 1 026 029 B1**
(45) Veröffentlichungstag und Bekanntmachung des Hinweises auf die Patenterteilung: **21.05.2003**
(21) Anmeldenummer: 00101355.6
(22) Anmeldetag: 24.01.2000
(51) Int. Cl.: B60N 2/48, B60N 2/427

(54) **Fahrzeugsitz mit einer crashaktiven Kopfstütze**
Vehicle seat with a headrest activated by an accident
Siège de véhicule avec un appui-tête activé par un accident

(30) Priorität: 05.02.1999 DE 19904738
(43) Veröffentlichungstag der Anmeldung: 09.08.2000
(73) Patentinhaber: Volkswagen Aktiengesellschaft, 38436 Wolfsburg (DE)
(72) Erfinder: Sinnhuber, Ruprecht, Dipl.-Ing., 38518 Gifhorn (DE)
(74) Vertreter: Neubauer, Hans-Jürgen, Dipl.-Phys.

(56) Entgegenhaltungen:
- EP-A- 0 627 340
- DE-A- 19 752 247
- FR-A- 2 765 841
- US-A- 4 641 884
- US-A- 5 795 019
- US-A- 5 836 648
- PATENT ABSTRACTS OF JAPAN vol. 1998, no. 12, 31. Oktober 1998 (1998-10-31) & JP 10 181402 A (TOYOTA MOTOR CORP), 7. Juli 1998 (1998-07-07)

## Beschreibung

Die Erfindung betrifft einen Fahrzeugsitz mit einer crashaktiven Kopfstütze nach dem Oberbegriff des Anspruchs 1.

Bei einem Heckaufprall auf ein Fahrzeug wird der Kopf eines Sitzbenutzers stark in Heckrichtung beschleunigt. Eine Kopfstütze als Sicherheitselement verhindert dabei, daß der Kopf relativ zum Fahrzeug mit hoher Verletzungsgefahr der Wirbelsäule in einem Peitschenschlag nach hinten geschleudert wird. Die Gefahr solcher Whiplash-Verletzungen kann bei üblichen Kopfstützen auch dann bestehen, wenn der Abstand des Kopfes zur Kopfstütze trotz Anlage des Rückens an der Rückenlehne bei ungünstigen Einstellungen der Kopfstütze verhältnismäßig groß ist.

Um diese Gefahr zu verringern, wurden bereits Vorrichtungen in Verbindung mit einer Kopfstütze vorgeschlagen, die diese bei einem Heckaufprall nach vorne in Richtung auf den Kopf eines Sitzbenutzers verlagern, um den Abstand zwischen Kopf und Kopfstütze zu verringern und damit den Kopf und die Halswirbel möglichst früh abzustützen, so daß möglichst keine Whiplash-Bewegungen auftreten:

Bei einem gattungsgemäßen Fahrzeugsitz (Zeitschrift "Automobil-Revue" Nr. 15/96) ist an der Oberseite einer Rückenlehne eine im Crashfall vorverlagerbare Kopfstütze gehalten dergestalt, daß in der Rückenlehne eine Druckplatte angebracht ist, welche durch eine crashbedingte Rückverlagerung eines Sitzbenutzers in Verbindung mit einer Lehnendeformation rückverlagerbar gehalten ist. Mittels einer angeschlossenen Hebelanordnung wird diese Rückverlagerung der Druckplatte auf die damit verbundene Kopfstütze für deren Vorverlagerung übertragen. Damit soll eine ruckartige Kopfbewegung eines Sitzbenutzers nach hinten abgefangen und der Kopf frühzeitig abgestützt werden.

Weiter ist eine ähnliche Anordnung mit einem zweiarmigen Hebel und einer in eine Rückenlehne integrierten Kopfstütze bekannt (EP 0 786 373 A2).

In einer weiteren, ebenfalls ähnlichen Anordnung (EP 0 794 085 A2) ist die Druckplatte in der Art eines biegsamen Zugelements ausgebildet, welches mit einem Hebel als Antrieb für eine crashbedingte Vorverlagerung der Kopfstütze verbunden ist.

Bei allen vorstehenden Anordnungen wird diese Vorverlagerung der Kopfstütze erreicht, wenn ein Sitzbenutzer crashbedingt stark in das Polstermaterial der Rückenlehne eintaucht und damit eine Lehnendeformation bewirkt. Ein solches starkes Eintauchen in die Rückenlehne erfolgt meist frühzeitig bei einem Heckaufprall mit einem Beckenbereich und Brustbereich eines Sitzbenutzers, wodurch entsprechend frühzeitig die Vorverlagerung der Kopfstütze bewirkt wird. Die Vorverlagerung der Kopfstütze eilt dann dem angestrebten Bewegungsablauf für eine etwa gleichzeitige und gleichmäßige Abstützung von Schulter und Kopf eines Sitzbenutzers vor, so daß sich beim Auftreffen des Kopfes auf die bereits vorzeitig nach vorne verlagerte Kopfstütze in der Halswirbelsäule eine ungünstige Scherbelastung zwischen Schulterpartie und Kopf ergeben kann.

Eine crashaktive Kopfstütze ist auch in EP 627 340 offenbart.

Aufgabe der Erfindung ist es, einen gattungsgemäßen Fahrzeugsitz mit einer crashaktiven Kopfstütze so weiterzubilden, daß eine ungünstige Voreilung der Kopfstützverlagerung reduzierbar ist.

Diese Aufgabe wird mit den Merkmalen des Anspruchs 1 gelöst.

Gemäß Anspruch 1 besteht die Rückenlehne aus einem unteren, bis etwa unter den Schulterbereich eines Sitzbenutzers reichenden Lehnenkörperteil und einem darüber und gegenüber dem Lehnenkörperteil neigungsverstellbaren Lehnenkopfteil. An der Oberseite des Lehnenkopfteils ist die Kopfstütze vorverlagerbar gehalten. Die Druckplatte ist im Lehnenkopfteil angeordnet und durch eine crashbedingte Rückverlagerung des Schulterbereichs eines Sitzbenutzers rückverlagerbar.

Damit wird erreicht, daß die Kopfstütze bei einem Heckaufprall im wesentlichen durch eine Rückverlagerung des Schulterbereichs vorverlagert, insbesondere nach vorne geschwenkt wird. Dies wird einerseits durch die Anordnung der Druckplatte im Lehnenkopfteil etwa in Höhe des Schulterbereichs und andererseits durch eine geeignete Relativstellung zwischen dem Lehnenkörperteil und dem Lehnenkopfteil erreicht. Damit wird eine ungünstige Voreilung der Kopfstützenverlagerung vorteilhaft vermieden oder zumindest reduziert. Somit führt diese Kombination von Lehnenkopfverstellung und crashaktiver Kopfstütze zur schnellen, gleichzeitigen und gleichmäßigen Abstützung von Schulter und Kopf beim Heckaufprall und reduziert damit eine Scherbelastung des Halses.

Die Abstützung der Druckplatte gegenüber einer Rückverlagerung erfolgt vorteilhaft reversibel durch eine Federanordnung, wobei ggf. zusätzliche Dämpfer- und/oder Deformationselemente eingesetzt werden können.

In einer Weiterbildung wird vorgeschlagen, daß die Relativeinstellung zwischen dem Lehnenkörperteil und dem Lehnenkopfteil über eine, individuelle Parameter eines Sitzbenutzers erfassende Sensorik selbsttätig durchgeführt wird. Solche individuellen Parameter können beispielsweise das Gewicht, die Größe und eine Sitzposition eines Sitzbenutzers sein.

Zudem kann die Kinematik der Vorverlagerung der Kopfstütze durch einstellbare Übertragungs- und Stützelemente, wie beispielsweise einstellbare Stützfederkennungen oder einstellbare Hebelgeometrien veränderbar gestaltet sein. Eine geeignete Kennung kann ebenfalls mittels einer Sensorik auf einen konkreten Sitzbenutzer adaptierbar ausgebildet sein.

Anhand einer Zeichnung wird die Erfindung näher erläutert.

Die einzige Figur zeigt einen Fahrzeugsitz 1, der aus einem Sitzteil 2, einer Rückenlehne 3 und einer an der Oberseite der Rückenlehne 3 angeordneten Kopfstütze 4 aufgebaut ist.

Die Rückenlehne 3 besteht aus einem unteren Lehnenkörperteil 5 und einem oberen Lehnenkopfteil 6. Das untere Lehnenkörperteil 5 erstreckt sich von dem Sitzteil 2 ausgehend bis etwa in die Höhe unter den Schulterbereich eines hier nicht dargestellten Sitzbenutzers. Das obere Lehnenkopfteil 6 ist an dem unteren Lehnenkörperteil 5 neigungsverstellbar gehalten und verläuft in etwa in Höhe des Schulterbereichs des hier nicht dargestellten Sitzbenutzers.

Die Relativeinstellung zwischen dem Lehnenkörperteil 5 und dem Lehnenkopfteil 6 wird über eine, die individuellen Parameter des Sitzbenutzers erfassende, hier nicht dargestellte Sensorik selbsttätig durchgeführt, um eine ungünstige Voreilung der Kopfstützenverlagerung im Crashfall zu vermeiden oder zumindest zu reduzieren. Als Parameter werden dabei das Gewicht, die Größe und die Sitzposition des Sitzbenutzers erfaßt.

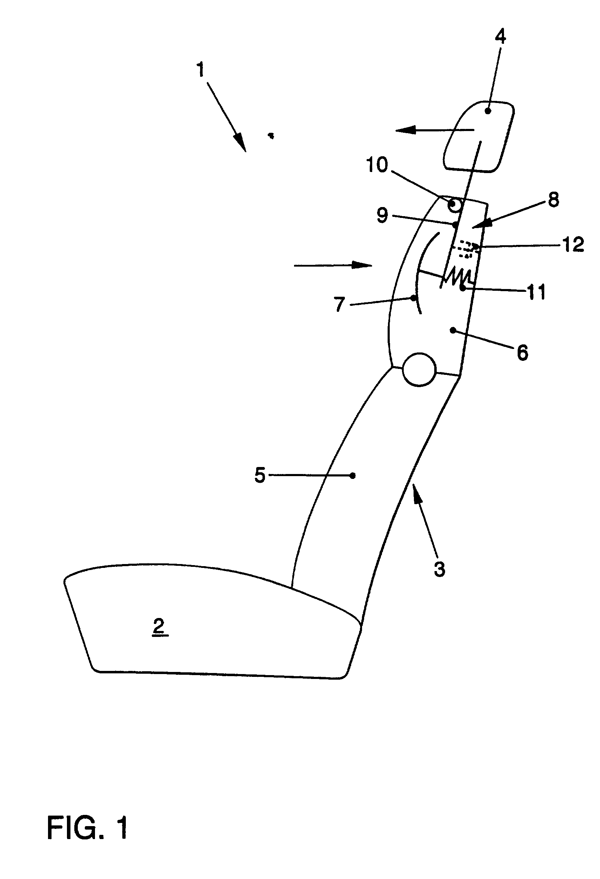

Wie dies aus der Fig. 1 weiter ersichtlich ist, ist die Kopfstütze 4 an der Oberseite des Lehnenkopfteils 6 vorverlagerbar gehalten. Dazu ist in dem Lehnenkopfteil 6 eine Druckplatte 7 angeordnet. Diese Druckplatte 7 kann bei einer crashbedingten Rückverlagerung eines Sitzbenutzers und einer damit einhergehenden Lehnendeformation rückverlagert werden. Diese Rückverlagerung der Druckplatte 7 wird mittels einer an die Druckplatte 7 angeschlossenen Hebelanordnung 8 auf die damit verbundene Kopfstütze 4 für deren Vorverlagerung übertragen.

Die Hebelanordnung 8 umfaßt einen Hebel 9, der einerseits mit der Druckplatte 7 und andererseits mit der Kopfstütze 4 verbunden ist. Weiter umfaßt die Hebelanordnung 8 eine dem Hebel 9 in der Oberseite des Lehnenkopfteils 6 zugeordnete Hebelachse 10 sowie eine Federanordnung 11, über die die Druckplatte 7 gegen eine Rückverlagerung reversibel abgestützt ist. Alternativ dazu oder zusätzlich kann, wie dies in der Fig. 1 strichliert eingezeichnet ist, ein zusätzliches Dämpfer- und/oder Deformationselement 12, z. B. ein Hydraulikzylinder, eingesetzt werden.

Die Funktionsweise des erfindungsgemäßen Fahrzeugsitzes 1 mit crashaktiver Kopfstütze 4 wird nachfolgend näher erläutert:

Bei einem Heckaufprall kommt es zu einer Rückverlagerung des Sitzbenutzers, der zuerst mit seinem Beckenbereich in das Lehnenkörperteil 5 und anschließend mit seinem Schulterbereich in das Lehnenkopfteil 6 gedrückt wird. Durch dieses Auftreffen des Schulterbereichs des Sitzbenutzers wird das Lehnenkopfteil 6 deformiert und ein Druck auf die Druckplatte 7 ausgeübt. Dadurch wiederum wird der an die Druckplatte 7 angeschlossene Hebel 9 über die Hebelachse 10 so verschwenkt, daß die Kopfstütze 4 nach vorne verlagert wird.

Aufgrund der über die Sensorik selbsttätig eingestellten und an die individuellen Parameter des Sitzbenutzers angepaßten Relativeinstellung zwischen dem Lehnenkörperteil 5 und dem Lehnenkopfteil 6 wird eine Relativstellung zwischen dem Lehnenkörperteil 5 und dem Lehnenkopfteil 6 erreicht, die bewirkt, daß die Kopfstütze 4 erst durch den Aufprall des Schulterbereichs auf das Lehnenkopfteil 6 vorverlagert wird. Dies führt zur gleichzeitigen und gleichmäßigen Abstützung von Schulter und Kopf beim Heckaufprall ohne eine Voreilung der Kopfstütze 4, wodurch eine Scherbelastung des Halses reduziert wird.

### BEZUGSZEICHENLISTE

- 1: Fahrzeugsitz
- 2: Sitzteil
- 3: Rückenlehne
- 4: Kopfstütze
- 5: Lehnenkörperteil
- 6: Lehnenkopfteil
- 7: Druckplatte
- 8: Hebelanordnung
- 9: Hebel
- 10: Hebelachse
- 11: Federanordnung
- 12: Dämpfer- und/oder Deformationselement

## Patentansprüche

1. Fahrzeugsitz (1) mit einer crashaktiven Kopfstütze (4),
die an der Oberseite einer Rückenlehne (3) im Crashfall vorverlagerbar gehalten ist dergestalt, daß in der Rückenlehne eine Druckplatte (7) angebracht ist, welche durch eine crashbedingte Rückverlagerung eines Sitzbenutzers und eine Lehnendeformation rückverlagerbar ist und diese Rückverlagerung mittels einer angeschlossenen Hebelanordnung (8) auf die damit verbundene Kopfstütze für deren Vorverlagerung übertragbar ist,
**dadurch gekennzeichnet,**
**daß** die Rückenlehne (3) aus einem unteren, bis etwa in die Höhe unter den Schulterbereich eines Sitzbenutzers reichenden Lehnenkörperteil (5) und einem darüber etwa in Schulterbereichhöhe und gegenüber dem Lehnenkörperteil (5) neigungsverstellbaren Lehnenkopfteil (6) besteht, und
**daß** an der Oberseite des Lehnenkopfteils (6) die Kopfstütze (4) vorverlagerbar gehalten ist und die Druckplatte (7) im Lehnenkopfteil (6) angeordnet und durch eine crashbedingte Rückverlagerung des Schulterbereichs eines Sitzbenutzers rückverlagerbar ist.

2. Fahrzeugsitz nach Anspruch 1, **dadurch gekennzeichnet, daß** die Druckplatte (7) gegen eine Rückverlagerung durch eine Federanordnung (11) reversibel abgestützt ist.

3. Fahrzeugsitz nach Anspruch 1 oder Anspruch 2, **dadurch gekennzeichnet, daß** die Druckplatte (7) durch wenigstens ein Dämpfer- und/oder Deformationselement (12) abgestützt ist.

4. Fahrzeugsitz nach einem der Ansprüche 1 bis 3, **dadurch gekennzeichnet, daß** die Relativeinstellung zwischen Lehnenkörperteil (5) und Lehnenkopfteil (6) über eine, individuelle Parameter eines Sitzbenutzers erfassende Sensorik selbsttätig einstellbar ist.

5. Fahrzeugsitz nach einem der Ansprüche 1 bis 4, **dadurch gekennzeichnet, daß** die Kinematik der Vorverlagerung der Kopfstütze (4) durch einstellbare Übertragungsund Stützelemente veränderbar ist und eine entsprechende Kennung mittels einer Sensorik auf einen konkreten Sitzbenutzer adaptierbar ist.

## Claims

1. Vehicle seat (1) having a crash-active head restraint (4) which is held on the upper side of a backrest (3) in a manner such that it can be displaced forwards in the event of a crash, the seat being configured in such a manner that a pressure plate (7) is fitted in the backrest, which pressure plate can be displaced rearwards by means of a crash-induced rearward displacement of a seat user and deformation of the backrest, and this rearward displacement can be transmitted, by means of an associated lever arrangement (8), to the head restraint, which is connected thereto, in order to displace the latter forwards,
**characterized in that** the backrest (3) comprises a lower backrest body part (5) extending approximately to below the shoulder region of a seat user, and a backrest top part (6) which is situated above it approximately at shoulder region height and can be adjusted in inclination relative to the backrest body part (5), and **in that** the head restraint (4) is held on the upper side of the backrest top part (6) in a manner such that it can be displaced forwards, and the pressure plate (7) is arranged in the backrest top part (6) and can be displaced rearwards by a crash-induced rearward displacement of the shoulder region of a seat user.

2. Vehicle seat according to Claim 1, **characterized in that** the pressure plate (7) is supported reversibly against rearward displacement by a spring arrangement (11).

3. Vehicle seat according to Claim 1 or Claim 2, **characterized in that** the pressure plate (7) is supported by at least one damper and/or deformation element (12).

4. Vehicle seat according to one of Claims 1 to 3, **characterized in that** the relative adjustment between the backrest body part (5) and backrest top part (6) can be adjusted automatically via a sensory mechanism detecting individual parameters of a seat user.

5. Vehicle seat according to one of Claims 1 to 4, **characterized in that** the kinematics of the forward displacement of the head restraint (4) can be changed by adjustable transmission and supporting elements, and a corresponding characteristic can be adapted to a specific seat user by means of a sensory mechanism.

## Revendications

1. Siège de véhicule (1) avec un appuie-tête (4) activé par un accident, qui est maintenu de manière déplaçable préalablement sur la partie supérieure d'un dossier (3) dans le cas d'un accident, par le fait qu'une plaque d'appui (7) est montée dans le dossier, laquelle peut être déplacée vers l'arrière par un déplacement vers l'arrière d'un utilisateur du siège, occasionné par un accident et par une déformation du dossier, et ce déplacement vers l'arrière peut être transmis au moyen d'un agencement de -levier raccordé (8) à l'appuie-tête associé, en vue de son déplacement préalable, **caractérisé en ce que** le dossier (3) se compose d'une partie de corps de dossier (5) s'étendant approximativement jusqu'à la hauteur d'un utilisateur du siège sous la région des épaules et d'une partie de tête de dossier (6) se trouvant par-dessus, approximativement à la hauteur de la région des épaules et d'inclinaison réglable par rapport à la partie de corps de dossier (5), et **en ce que** sur la partie supérieure de la partie de tête de dossier (6), l'appuie-tête (4) est maintenu de manière déplaçable préalablement et la plaque d'appui (7) est disposée dans la partie de tête de dossier (6) et est déplaçable vers l'arrière par un déplacement vers l'arrière de la région des épaules d'un utilisateur du siège, occasionné par un accident.

2. Siège de véhicule selon la revendication 1, **caractérisé en ce que** la plaque d'appui (7) est supportée de manière réversible contre un déplacement vers l'arrière par un agencement de ressort (11).

3. Siège de véhicule selon la revendication 1 ou la revendication 2, **caractérisé en ce que** la plaque d'appui (7) est supportée par au moins un élément d'amortissement et/ou de déformation (12).

4. Siège de véhicule selon l'une quelconque des revendications 1 à 3, **caractérisé en ce que** l'ajustement relatif entre la partie de corps de dossier (5) et la partie de tête de dossier (6) est ajustable automatiquement par le biais d'un système de détection détectant des paramètres individuels d'un utilisateur du siège.

5. Siège de véhicule selon l'une quelconque des revendications 1 à 4, **caractérisé en ce que** la cinématique du déplacement préalable de l'appuie-tête (4) peut être modifiée par des éléments de transfert et de support ajustables et une caractéristique correspondante peut être adaptée à un utilisateur du siège concret par le biais d'un système de détection.
